# FASCICULE DE BREVET EUROPEEN

(11) **EP 2 433 024 B1**
(45) Date de publication et mention de la délivrance du brevet: **02.05.2018**
(21) Numéro de dépôt: 10723014.6
(22) Date de dépôt: 18.05.2010
(51) Int. Cl.: F16C 7/00, B29C 70/24, B29C 70/86

(54) **PROCEDE DE FABRICATION D'UNE BIELLE EN MATERIAU COMPOSITE**
VERFAHREN ZUR HERSTELLUNG EINER VERBUNDMATERIALVERBINDUNGSSTANGE
METHOD FOR MANUFACTURING A COMPOSITE MATERIAL CONNECTING ROD

(30) Priorité: 20.05.2009 FR 0902460
(43) Date de publication de la demande: 28.03.2012
(73) Titulaire: Safran Landing Systems, 78140 Vélizy-Villacoublay (FR)
(72) Inventeur: MASSON, Richard, 78530 Les Loges en Josas (FR); DUNLEAVY, Patrick, 91120 Palaiseau (FR)
(74) Mandataire: Parzy, Benjamin Alain
(86) Numéro de dépôt international: PCT/EP2010/056828
(87) Numéro de publication internationale: WO 2010/133601

(56) Documents cités:
- WO-A1-2006/058541
- DE-A1-102007 015 909
- FR-A1- 2 893 683
- US-A1- 2008 241 296

## Description

La présente invention concerne un procédé de fabrication d'une bielle en matériau composite ainsi qu'une bielle obtenue par la mise en oeuvre de ce procédé.

L'invention trouvera avantageusement application dans le domaine de l'aéronautique et notamment la bielle obtenue pourra être utilisée comme partie intégrante d'un atterrisseur.

Toutefois bien que particulièrement prévu pour une telle application, la bielle pourra également être utilisée dans d'autres domaines nécessitant des bielles présentant notamment un rapport résistance/poids important.

### ARRIERE PLAN DE L'INVENTION

De manière générale, une bielle composite, dont le corps est creux, est obtenue par enroulement filamentaire autour d'un mandrin ou par enroulement d'un pli de fibres tissées. Dans ce type de réalisation l'épaisseur du corps de la bielle est obtenue en jouant sur le nombre d'enroulements des fils ou des plis. Dans ce type de réalisation les différents profils réalisables pour la bielle sont limités et notamment la section est nécessairement fermée.

On connaît également du document français FR2893683 déposée par la demanderesse un deuxième procédé de fabrication d'une bielle en matière composite dans le domaine aéronautique. Pour la réalisation de cette bielle on utilise un patron présentant deux bords opposés, le patron étant découpé dans un tissu de fibres composites comportant plusieurs plis primaires superposés et liés entre eux de sorte que les plis primaires puissent glisser les uns par rapport aux autres lors de la mise en forme. Le procédé décrit dans ce document comporte une étape dans laquelle on réalise une étape de recouvrement des bords en biseau permettant une jonction de manière très solide.

Dans ce deuxième procédé de fabrication la résistance en compression et en flambement de la bielle est notamment obtenue grâce à sa section fermée permettant un gain en poids.

Le procédé de fabrication est satisfaisant mais complexe notamment en ce qui concerne le positionnement et la jonction des bords opposés entre eux. Les différents profils de bielle réalisables par ce procédé sont également, à l'instar du premier procédé cité, limités.

On connaît également un troisième procédé de fabrication d'une bielle composite décrit dans la demande WO2009/000925 dans laquelle on réalise deux coquilles dont l'assemblage permet de constituer le corps de la bielle et créant une section droite fermée assurant la résistance mécanique de la bielle en traction et en compression. Chaque coquille est réalisée en déposant des fibres pré-imprégnées sous différentes formes telles que mèches, nappes unidirectionnelles ou encore nappes tissées. L'assemblage des deux coquilles, complexe, peut notamment être réalisé par collage ou par la pose de fixations mécaniques.

### OBJET DE L'INVENTION

La présente invention a pour objet de proposer un procédé de fabrication d'une bielle composite simplifié par rapport aux procédés antérieurs.

### RESUME DE L'INVENTION

A cet effet la présente invention est relative à un procédé de fabrication d'une bielle en matériau composite à partir d'une préforme fibreuse comportant un certain nombre de plis primaires de fibres reliées entre eux par des liens autorisant un glissement des plis les uns sur les autres lors de la mise en forme de la préforme, la préforme comportant une partie centrale destinée à constituer le corps de la bielle et comportant deux bords latéraux opposés, et des extensions destinées à former des chapes de la bielle, lequel procédé comportant l'étape de mettre en forme la préforme fibreuse en maintenant les deux bords latéraux opposés écartés pour donner à la préforme fibreuse un profil ouvert au niveau de la partie centrale, puis de procéder à une injection de résine et provoquer sa polymérisation suivant les caractéristiques décrites dans la revendication 1. Le procédé de l'invention permet ainsi de fabriquer une bielle dont le corps présente une section ouverte permettant de supprimer l'étape d'assemblage des bords et par conséquent de simplifier considérablement la fabrication de la bielle. Contrairement au procédé décrit dans le document WO2009/000925, la bielle est ici essentiellement terminée après l'injection de résine et son corps reste ouvert, sans qu'il soit besoin de rapporter une deuxième coque de section ouverte. Il reste bien sûr à usiner les extrémités de la préforme pour former les chapes.

### BREVE DESCRIPTION DES DESSINS

La présente invention sera mieux comprise à la lecture d'un exemple détaillé de réalisation en référence aux dessins annexés, fournis à titre d'exemple non limitatif, parmi lesquels :
- la figure 1 représente un exemple de réalisation, en perspective d'une bielle composite conforme à l'invention ;
- la figure 2 représente de manière schématique un exemple de réalisation d'une préforme fibreuse disposée à plat permettant l'obtention de la bielle illustrée à la figure 1 ;
- la figure 3 représente une vue en coupe transversale de la bielle au niveau de son corps ;
- la figure 4 représente une vue de dessus d'une bielle 1 équipée d'axes ;
- la figure 5 représente une vue d'un atterrisseur dont la contrefiche comporte une bielle selon l'invention.

### DESCRIPTION DETAILLEE DE L'INVENTION

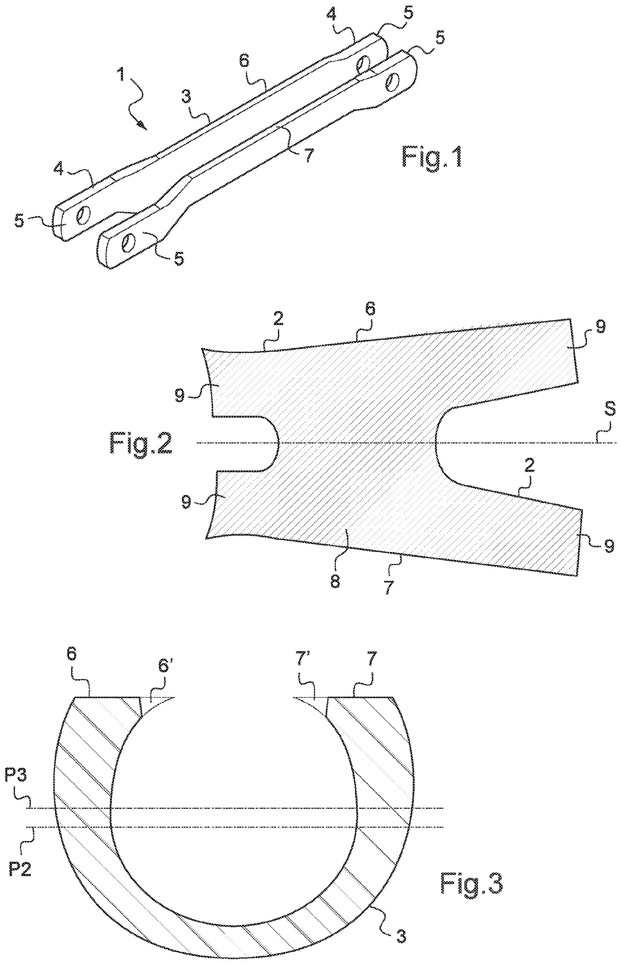

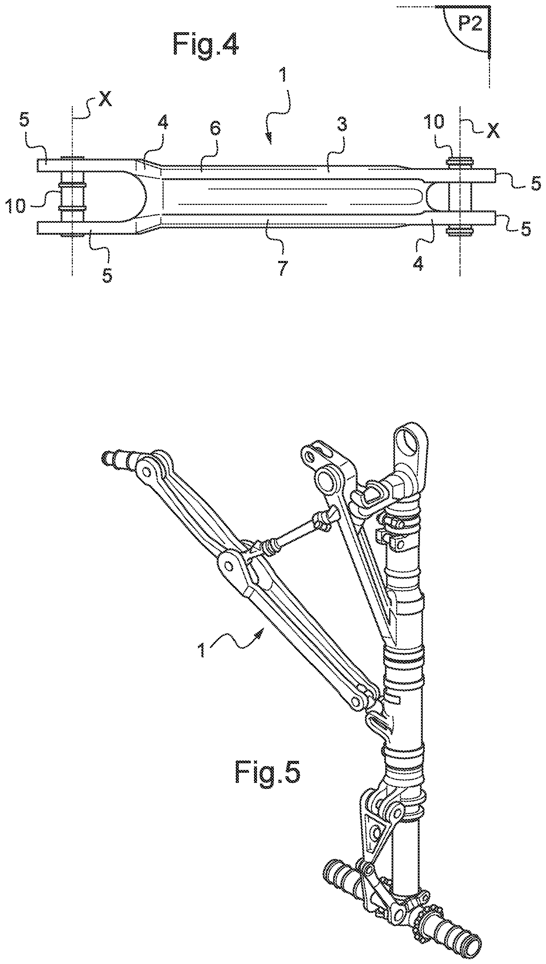

La figure 1 représente une bielle composite 1 selon l'invention obtenue à partir une préforme fibreuse 2 illustrée à la figure 2. La bielle composite 1 sera avantageusement utilisée comme élément d'atterrisseur, par exemple comme bras de contrefiche, comme illustré à la figure 5.

La bielle composite 1 comporte un corps 3 de section courante ouverte avec une fourche 4 à chaque extrémité. Chaque fourche 4 porte deux chapes 5 disposées en vis-à-vis, destinées, comme illustré à la figure 4, à recevoir un axe 10 de liaison à d'autres éléments de structure.

La bielle 1 est fabriquée selon l'invention de la façon suivante. On commence par découper la préforme fibreuse 2 dans un tissu, de préférence un tissu de fibres tissées selon trois directions. Une technique de fabrication du tissu de la préforme fibreuse 2 est décrite dans le document FR 2893683 représentatif de l'arrière plan technologique de l'invention. La technique de fabrication de la préforme fibreuse 2 (ou patron) décrite dans ce document peut être utilisée dans le cadre de l'invention, aussi le contenu de ce document doit être considéré comme faisant partie de la présente demande. Le tissu de fibres comporte de préférence plusieurs plis primaires de fibres de trame reliés entre eux par des fibres de chaîne qui s'étendant d'un pli primaire à l'autre pour lier les plis primaires entre eux. Cette liaison entre les plis primaires permet de les solidariser entre eux tout en permettant un glissement relatif des plis primaires lors de la mise en forme de la préforme fibreuse 2, et plus particulièrement de son cintrage. La découpe de la préforme 2 dans le tissu est réalisée de préférence de sorte que les fils de trame s'étendent selon un plan de symétrie S de la préforme fibreuse 2. La préforme fibreuse 2 comporte une partie centrale 8, qui va constituer le corps 3, avec deux bords latéraux opposés 6 et 7 et quatre extensions 9 destinées à former les chapes.

Ensuite, la préforme est mise en forme de façon à donner à la partie centrale 8 une forme creuse en repliant les bords opposés 6 et 7 de la préforme fibreuse 2 tout en les maintenant écartés. On donnera avantageusement à la partie centrale la forme de section courante en C illustrée à la figure 3. De préférence, la mise en forme est réalisée en enroulant la préforme fibreuse 2 autour d'un mandrin. Dans le cas d'autres types de profils ouverts, et par exemple en U ou en V, la préforme fibreuse 2 pourra être pliée, enroulée ou encore recourbée pour former des bielles dont le corps pourra ainsi présenter une variété de formes à section ouverte dans laquelle les bords latéraux 6, 7 sont maintenus écartés.

Les extensions 9 vont alors s'étendre en regard deux par deux dans des plans parallèles, et sont bien sûr destinés à former les chapes de la bielle.

Le procédé comprend ensuite une étape d'injection de résine. Cette étape est avantageusement réalisée suivant le procédé connu en soit de transfert de résine dit procédé « RTM » (resin transfer molding) et dans laquelle la résine imprègne les fibres de la préforme fibreuse 2.

A cet effet, la préforme mise en forme sur le mandrin est avantageusement placée dans un moule que l'on ferme et que l'on remplit de résine par le procédé RTM. Puis on chauffe l'ensemble pour provoquer la polymérisation de la résine. En variante, on pourra également utiliser des procédés d'infusion de résine.

On obtient alors une forme creuse solide présentant un corps central à section ouverte, terminé par des extensions qu'il suffit d'usiner (contour et perçage) pour former les chapes de la bielle, comme illustré à la figure 1. On termine l'opération en plaçant des inserts dans les orifices des chapes.

Le procédé de l'invention permet ainsi de supprimer l'étape d'assemblage des bords latéraux de la préforme, et ne requiert pas la réalisation d'une ou de plusieurs autres coquilles supplémentaires destinées à être assemblées à la forme creuse.

En outre, une bielle de section ouverte est moins rigide en torsion qu'une bielle de section fermée, ce qui peut avantageusement être mis à profit dans le cadre de l'utilisation d'une telle bielle comme bras de contrefiche. En effet, une jambe d'atterrisseur ainsi que la structure de voilure ou de fuselage correspondante peut se déformer significativement, et la souplesse en torsion d'une telle bielle permet d'accommoder plus facilement ces déformations.

Bien entendu, il est connu que la résistance en compression d'un corps allongé à section ouverte est plus faible que celle d'un corps allongé à section fermée, pour des épaisseurs et des diamètres similaires. Il convient donc de prendre des dispositions constructives aptes à donner à la bielle ainsi réalisée la résistance en compression souhaitée.

En particulier, il est avantageux de faire en sorte que le plan d'introduction d'efforts dans la bielle, c'est-à-dire le plan P2 passant par les axes centraux X des chapes 5 tel que visible à la figure 4, s'étende le plus près possible d'un plan parallèle P3 passant par le centre d'inertie des sections courantes du corps, et, de préférence, entre le plan P3 et le fond du corps de la bielle comme illustré sur la figure 4. Idéalement, les plans P2 et P3 sont confondus.

Il est également avantageux de raidir les bords latéraux 6,7 pour augmenter la résistance de la bielle au flambage local des bords.

A cet effet, et selon un mode particulier de mise en oeuvre, on utilise une préforme fibreuse 2 dont l'épaisseur est évolutive, au moins selon une direction perpendiculaire au plan de symétrie S de la préforme.

Comme cela est visible à la figure 3, les bords 6,7 sont plus épais que la partie de la préforme 2 proche du plan de symétrie.

Une telle épaisseur évolutive peut être obtenue de plusieurs façons. Tout d'abord, cette évolution d'épaisseur peut être obtenue par tissage. Par ailleurs, la préforme 2 peut être découpée dans un tissu épais dont l'épaisseur correspond à l'épaisseur désirée des bords, puis la préforme est amincie des bords vers le plan de symétrie, par exemple en abrasant ou en coupant les fibres à enlever. Selon une deuxième technique, la préforme est découpée dans un tissu dont l'épaisseur correspond à l'épaisseur la plus faible du corps de bielle, et les bords latéraux sont épaissis en intercalant des plis de fibres intercalaires entre les plis primaires du tissu. Une telle technique de renforcement est décrite dans le document FR2893683 à propos du renforcement des extensions de la préforme, mais elle pourra être avantageusement utilisée pour épaissir les bords latéraux de la partie centrale de la préforme.

On remarquera que la forme particulière telle qu'illustrée sur la figure 3 des bords latéraux 6,7 résulte directement de l'opération de cintrage lors de laquelle les plis du tissus glissent les uns sur les autres et donnent aux bords latéraux la forme en biseau illustrée. De préférence, on supprimera par usinage, après polymérisation de la préforme, les apex internes 6', 7' des bords latéraux (les parties supprimées sont représentées en pointillés).

On pourra utiliser d'autres moyens pour rigidifier les bords latéraux, 6, 7, comme par exemple faire en sorte lors de mise en forme de plier les bords parallèlement à eux-mêmes de sorte qu'ils présentent un retour ou bord tombé qui, lorsque l'ensemble sera polymérisé, contribuera à stabiliser les bords, à la manière du bord tombé d'un panneau.

Le procédé de fabrication présente donc des avantages importants par rapport aux techniques antérieures dont celle de permettre la réalisation d'une bielle selon un procédé simplifié en autorisant une grande variété de profils ouverts et notamment sensiblement en forme de C, U ou encore en V, tout en assurant une résistance mécanique importante permettant d'utiliser la bielle réalisée comme contrefiche briseuse d'atterrisseur tel qu'illustré à la figure 5.

D'autres caractéristiques de l'invention peuvent également être envisagées sans pour autant sortir du cadre de l'invention défini par les revendications ci-après.

En particulier, bien que l'invention consiste à laisser la section du corps de bielle ouverte pour supprimer une opération d'assemblage des bords latéraux entre eux, on pourra néanmoins stabiliser ceux-ci en prévoyant un ou plusieurs liens qui s'étendent d'un bord à l'autre, par exemple une paroi mince rigide plane rapportée sur les deux bords latéraux et solidarisée à ces derniers. Ces renforts n'ont pas de fonction structurelle autre que de stabiliser les bords pour diminuer leur propension au flambage local. En particulier, ils ne participent pas du tout ou de façon très marginale à la résistance en traction de la bielle.

## Revendications

1. Procédé de fabrication d'une bielle en matériau composite à partir d'une préforme fibreuse (2) comportant un certain nombre de plis primaires de fibres reliés entre eux par des liens autorisant un glissement des plis les uns sur les autres lors de la mise en forme de la préforme, la préforme comportant une partie centrale (8) destinée à constituer le corps de la bielle et comportant deux bords latéraux (6, 7) opposés, et des extensions (9) destinées à former des chapes de la bielle, **caractérisé en ce que** le procédé comporte l'étape de mettre en forme la préforme fibreuse pour lui donner une forme creuse en maintenant les deux bords latéraux opposés écartés pour donner à la préforme fibreuse un profil ouvert au niveau de la partie centrale, puis de procéder à une injection de résine et provoquer sa polymérisation, la préforme fibreuse ayant une épaisseur évolutive qui augmente, perpendiculairement à un plan de symétrie de la préforme, du centre de celle-ci vers les bords latéraux (6, 7), de sorte que les bords latéraux soient rigidifiés pour en augmenter la résistance au flambement local.

2. Procédé selon la revendication 1, dans lequel la préforme fibreuse est enroulée autour d'un mandrin de forme avant injection de résine et polymérisation.

3. Procédé selon la revendication 1, dans lequel la préforme est mise en forme de sorte qu'un plan d'introduction d'efforts (P2) passant par les axes des chapes de la bielle finie s'étende sous ou est confondu avec un plan parallèle (P3) passant par les centres d'inertie des sections du corps de la bielle.

## Patentansprüche

1. Verfahren zum Herstellen einer Verbundmaterial-Verbindungsstange aus einem Faservorformling (2), der eine bestimmte Anzahl von primären Faserschichten umfasst, die miteinander über Bindungen verbunden sind, die ein Gleiten der Schichten aufeinander während des Formens des Vorformlings gestatten, wobei der Vorformling einen zentralen Abschnitt (8) umfasst, der dazu bestimmt ist, den Körper der Verbindungsstange zu bilden, und zwei entgegengesetzte Seitenränder (6, 7) umfasst, sowie Verlängerungen (9), die dazu bestimmt sind, Gabelköpfe der Verbindungstange zu bilden, **dadurch gekennzeichnet, dass** das Verfahren den Schritt des Formens des Faservorformlings umfasst, um ihm eine hohle Form zu geben, während die beiden entgegengesetzten Seitenränder beabstandet gehalten werden, um dem Faservorformling im Bereich des zentralen Abschnittes ein offenes Profil zu geben, und daraufhin des Durchführens einer Harzinjektion und des Bewirkens der Polymerisation des Harzes, wobei der Faservorformling eine fortschreitende Dicke hat, die senkrecht zu einer Symmetrieebene des Vorformlings von dessen Mitte zu den Seitenrändern (6, 7) hin zunimmt, derart, dass die Seitenränder versteift werden, um deren lokale Knickfestigkeit zu erhöhen.

2. Verfahren nach Anspruch 1, bei dem der Faservorformling vor der Harzinjektion und der Polymerisation um einen Formdorn gewickelt wird.

3. Verfahren nach Anspruch 1, bei dem der Vorformling derart geformt wird, dass sich eine Krafteinleitungsebene (P2), die durch die Achsen der Gabelköpfe der fertigen Verbindungsstange geht, unter einer durch die Massenmittelpunkte der Querschnitte des Körpers der Verbindungsstange gehenden parallelen Ebene (P3) erstreckt oder mit dieser zusammenfällt.

## Claims

1. A method of fabricating a rod of composite material from a fiber preform (2) comprising a certain number of primary fiber plies connected together by links allowing plies to slide relative to one another while the preform is being shaped, the preform including a central portion (8) for constituting the body of the rod and including two opposite side portions (6, 7), together with extensions (9) for forming lugs of the rod, which method includes the step of shaping the fiber preform so as to give it a hollow shape while keeping the two opposite side portions spaced apart so as to give the fiber preform an open profile in its central portion, followed by injecting resin and causing it to polymerize, the fiber preform having a varying thickness that increases perpendicularly to a plane of symmetry of the preform on going from the center thereof towards the side portions (6, 7) so that the side portions (6, 7) are stiffened to increase local buckling strength.

2. A method according to claim 1, wherein the fiber preform is wrapped around a shaper mandrel before injecting resin and polymerizing it.

3. A method according to claim 1, wherein the preform is shaped in such a manner that a force introduction plane (P2) passing via the axes of the lugs of the finished rod extends under or coincides with a parallel plane (P3) containing the centers of inertia of the sections of the body of the rod.
